# EUROPEAN PATENT SPECIFICATION

(11) **EP 2 870 672 B1**
(45) Date of publication and mention of the grant of the patent: **21.08.2019**
(21) Application number: 13737511.9
(22) Date of filing: 03.07.2013
(51) Int. Cl.: H02J 7/00, B25F 5/00, B25B 21/00

(54) **CORDLESS POWER TOOL WITH USB CHARGING**
DRAHTLOSES WERKZEUGGERÄT MIT USB-LADEANSCHLUSS
OUTIL ÉLECTRIQUE AVEC CHARGEUR USB

(30) Priority: 06.07.2012 US 201261668623 P
(43) Date of publication of application: 13.05.2015
(73) Proprietor: Nanjing Chervon Industry Co., Ltd., Nanjing, Jiangsu 211106 (CN)
(72) Inventor: PATEL, Millika, Des Plaines, IL 60018 (US); NEWTON, Robert, Elgin, IL 60124 (US)
(74) Representative: Sun, Yiming
(86) International application number: PCT/US2013/049307
(87) International publication number: WO 2014/008389

(56) References cited:
- DE-A1- 10 345 135
- DE-A1-102004 051 728
- DE-A1-102007 060 946
- DE-A1-102009 027 571
- DE-A1-102010 029 729
- DE-U1-202008 002 134
- DE-U1-202012 001 853
- US-A1- 2004 164 708
- US-A1- 2005 194 928
- US-A1- 2008 061 733
- US-A1- 2009 138 116
- US-A1- 2009 241 743
- US-A1- 2010 001 017
- US-A1- 2010 102 774
- US-A1- 2011 109 093
- US-A1- 2012 033 081

## Description

### TECHNICAL FIELD

This disclosure relates to power tools, and, in particular, to power tools configured to use rechargeable batteries.

### BACKGROUND

In general, cordless power tools refer to power tools that are adapted to receive power from a rechargeable battery that is either permanently or removably attached to the power tool. Many types of power tools have been adapted to receive power from rechargeable batteries, including various types of saws, drills, drivers, hammers, oscillating tools, and the like. Rechargeable batteries for cordless power tools, such as nickel cadmium (NiCad) based batteries or lithium based batteries, are typically designed to produce a particular output voltage, e.g., 3.6V, 7.2V, 9.6V, 12V, 14.4V, 18V, or 24V. Higher voltage batteries are used in power tools that have higher power requirements, and vice versa.

Such power tools and batteries are known from documents US 2012/0033081 A1, DE 20 2008 002 134 U1, DE 10 2009 027 571 A1, DE 10 2010 029 729 A1, DE 103 45 135 A1, DE 20 2012 001 853 U, US 2005 194 928 and US 2010/0102774. A ventilator having a USB interface is mentioned in document DE 10 2004 051 728. A battery charger is known from document US 2008 0061 733 A1.

Cordless power tools provide portability and convenience advantages over corded tools, but the rechargeable batteries that power them become depleted and need to be recharged. Cordless power tools are usually provided with a battery charger that is configured to recharge the batteries for the power tool. Battery chargers are typically configured to utilize AC power received via a conventional AC outlet, although some battery chargers may be equipped to use a vehicle's 12-volt DC power outlet. Therefore, to ensure continuous power tool usage, the user of a cordless power tool must carry the battery charger along with the tool and have access to an appropriate outlet. AC power outlets, however, are often located in distant, inconvenient, and/or inaccessible locations relative to the work area which makes it difficult to recharge the tool's battery when needed.

There is a need for cordless power tools that are capable of being charged using a more readily available power source, such as low voltage power sources and, in particular, universal serial bus (USB) power sources.

The invention is defined by claim 1 which has been delimited against US 2005 0194928.

Preferred embodiments are set out in the dependent claims.

### BRIEF DESCRIPTION OF DRAWINGS

FIG. 1 is a block diagram of a cordless power tool and USB charging system according to the present disclosure.
FIG. 2 is a block diagram of an alternative embodiment of a cordless power tool and USB charging system according to the present disclosure.
FIG. 3 is a side view of an embodiment of a power tool configured for USB charging with a portion of the housing removed.
FIG. 4 is a perspective view of the power tool of FIG. 3.
FIG. 5 is a bottom view of the power tool of FIG. 3.
FIG. 6 is a side view of an embodiment of a power tool similar to FIG. 3 with half of the clamshell housing removed to show the internal components of the tool.
FIG. 7 is a perspective view of the power tool of FIG. 6.
FIG. 8 is a partial view of the power tool of FIG. 6 showing the Micro-USB port of the power tool.
FIG. 9 is a perspective view of a Micro-USB connector for supplying power to the power tool of FIGS. 3-8 via the Micro-USB port.

### DETAILED DESCRIPTION

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles of the disclosure as would normally occur to one of ordinary skill in the art to which this disclosure pertains.

The present disclosure is directed to cordless power tools that are adapted to utilize USB power for charging the rechargeable batteries. By enabling power tools to be charged via a standard USB interface, power tools may be charged from any location that includes a computer, laptop, or USB power supply device. In addition, the proliferation of USB compliant devices means that USB power adapters and cords are in abundance and readily available when needed.

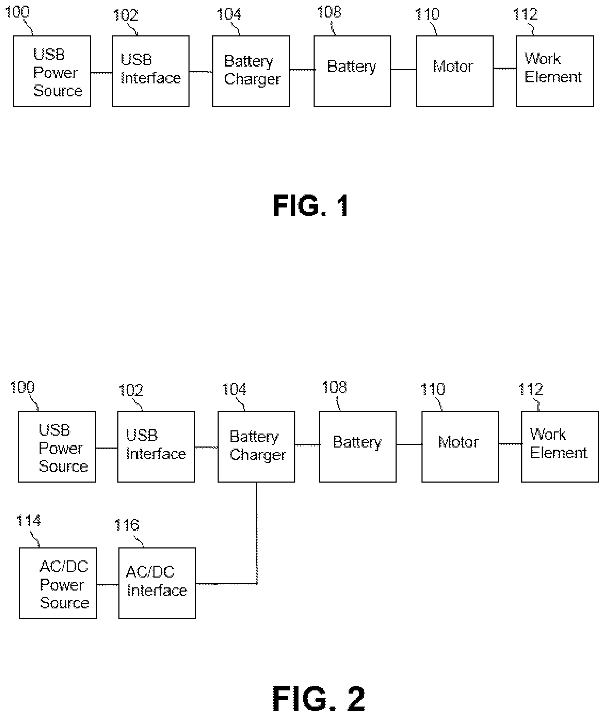

FIG. 1 depicts a block diagram of the main components of a cordless power tool and USB charging system in accordance with the present disclosure. The cordless power tool includes a motor 110 adapted to drive a work element 112. The work element 112 is part of the tool that performs the work on a work piece, such as cutting, sanding, grinding, boring, and driving. Therefore, the work element 112 may comprise a saw blade, a sanding disc, a grinding wheel, a drill bit, a wrench, and the like. The motor 110 comprises an electric motor that is coupled to the work element through a drive member (not shown), in the form of an output shaft. The power output of the electric motor 110 depends on the type of work element that it is configured to drive and the desired level of work, e.g., heavy duty or light duty.

The electric motor 110 is operatively coupled to and powered by a rechargeable battery 108. The rechargeable battery 108 may be removably attached to the power tool or may be built into the housing of the power tool. The rechargeable battery may comprise any suitable type of rechargeable battery, such as nickel cadmium (NiCad) or lithium based batteries. The rechargeable battery is configured to produce an output voltage that is capable of powering the electric motor. Depending on the type of motor and the desired work level, the rechargeable battery may have an output voltage of 3.6V, 7.2V, 9.6V, 12V, 14.4V, 18V, or 24V although any suitable battery voltage may be used. In one embodiment, the rechargeable battery comprises a lithium based battery, such as a lithium-ion cell battery. Lithium-ion cells are typically lighter and have a much slower self-discharge rate than energy-equivalent batteries of other types.

A battery charger 104 is configured to recharge the rechargeable battery 108. The battery charger 104 includes a charging circuit that is coupled to the rechargeable battery to supply energy to the battery in order to recharge the battery. The charging circuit may have any suitable configuration capable of charging the rechargeable battery. The implementation of the charging circuit depends at least partially on the type of battery.

In embodiments in which the rechargeable battery 108 is removable from the power tool, the battery charger may include a cradle or stand including one or more receptacles for receiving a rechargeable battery after it has been removed from the power tool. In this embodiment, the battery charger and the rechargeable battery include complementary electrical terminals that cooperate to couple the battery to the charging circuit when the battery is installed in the charger and to decouple the charging circuit from the battery when the battery is removed from the charger. In embodiments in which the battery charger is built into the housing of the power tool, the charging circuit of the battery charger is permanently wired to the rechargeable battery.

In accordance with the present disclosure, the battery charger 104 and charging circuit are configured to receive and utilize USB power to charge the rechargeable battery 108. USB is a standard that defines the cables, connectors, and communication protocols for connection, communication, and power supply between computers and electronic devices. There are four USB specifications - USB 1.x, USB 2.0, USB 3.0, USB 4.0 or newer specification. The USB 1.x and 2.0 specifications require that a supply voltage for powering USB devices be no less than 4.75 V and no more than 5.25V (i.e., 5V±5%) and a maximum current for powering USB devices be no more than 500 mA. The USB 3.0 specification requires that the supply voltage for powering USB devices be no less than 4.45 V and no more than 5.25Vand a maximum current for powering USB devices be no more than 900 mA. The charging circuit of the battery charger 104 is configured to receive USB power provided in accordance with one of the USB specifications, e.g., USB 3.0, and to utilize the USB power to recharge the rechargeable battery.

A USB interface 102 is used to couple the battery charger 104 and charging circuit to the USB power source 100. The USB interface 102 includes a standard USB connector and a standard USB port. The USB port is provided in the battery charger 104, and the USB connector is provided at one end of a cable that is electrically coupled at the other end to a USB power source 100. The USB connector and USB port may be any suitable USB connector and port type as defined by the USB specifications. For example, in one embodiment, the USB connector comprises Micro USB connector and the USB port comprises a Micro USB port. In alternative embodiments, any type of USB connector and USB port may be used.

The cable of the USB interface 102 electrically connects the USB connector to a USB power source 100. In one embodiment, the cable includes an AC adapter and plug at the other end that enables the USB power to be derived from a conventional AC outlet. Alternatively, the cable may include a second USB connector that is connected to a USB port of a computer, laptop, or other device that is capable of providing USB power including an AC adapter and plug that is provided with a USB port. When the USB connector is received in the USB port of the battery charger, the charging circuit is electrically coupled to receive USB power from the USB power source and to use the USB power to charge the rechargeable battery.

The charging circuit in FIG. 1 is only configured to utilize a single power source, i.e., the USB power source. In alternative embodiments, the battery charger and charging circuit may be configured to utilize other power sources in addition to USB power to charge the battery. For example, as depicted in FIG. 2, the battery charger 104 may be configured to be connected to an AC/DC power source 114 such as AC power source including an AC adapter and plug and/or a DC power source having a vehicle power adapter connected to the battery charger via an AC/DC interface 116. In this embodiment, separate charging circuits may be provided in the battery charger for each power source and a control circuit may be configured to determine which power source to use if more than one power source is connected, such as if a USB power source and an AC power source are each connected to the battery charger at the same time.

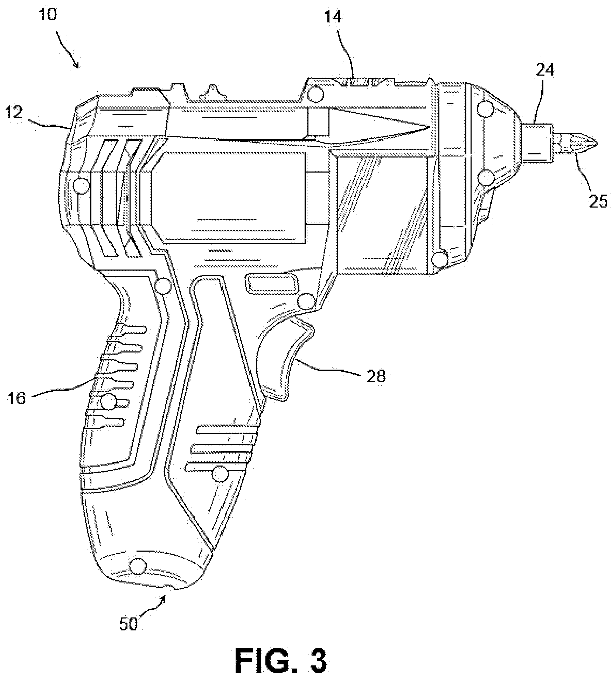

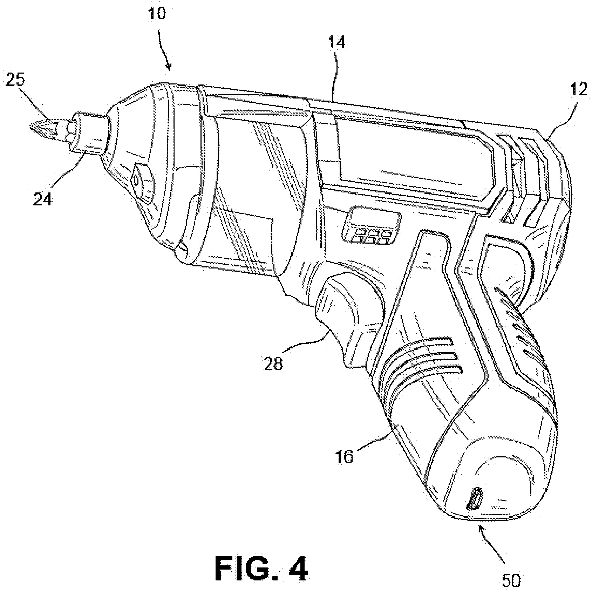

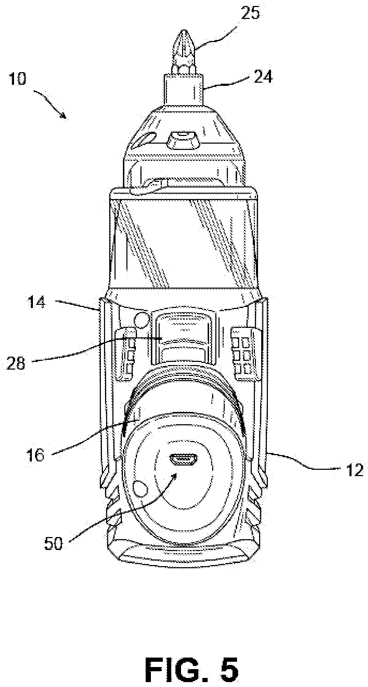

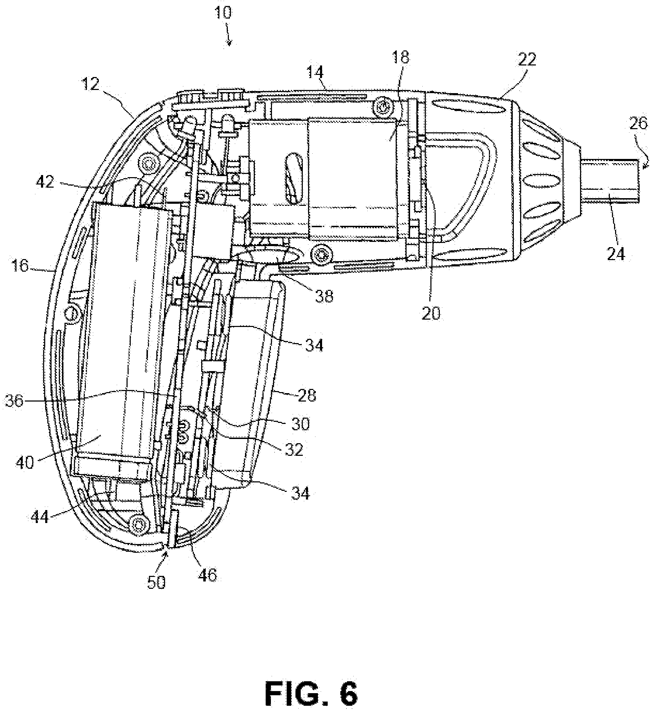

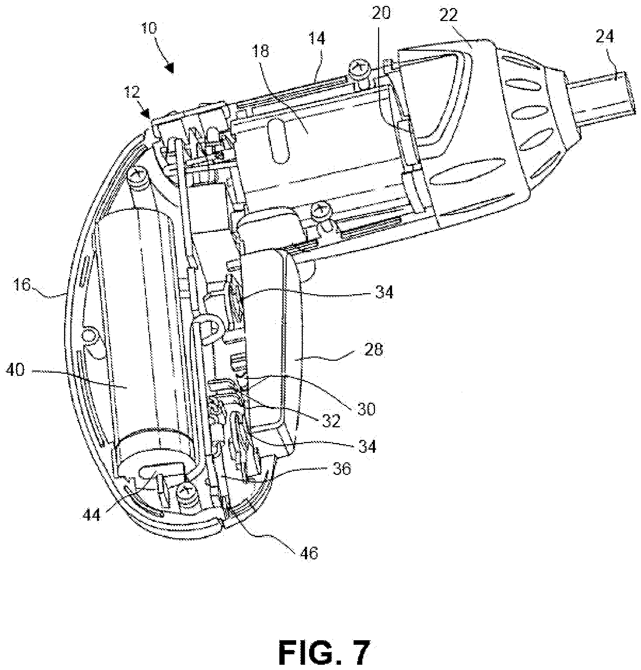

FIGS. 3-5 depict one embodiment of a power tool 10 adapted for USB charging. FIGS. 6 and 7 depict an embodiment of a power tool 10 similar to the power tool of FIGS. 3-5 with a portion of the housing removed to show the internal components of the tool. The embodiments of FIGS. 3-7 are intended to be non-limiting examples showing a method of configuring a power tool to utilize USB power. The power tool 10 of FIGS. 3-7 comprises a cordless driver configured to drive complementarily configured accessory tools and tool bits. The cordless driver 10 includes a housing 12 having a motor housing portion 14 and a pistol grip portion 16. In one embodiment, the motor housing portion 14 and grip portion 16 are formed of two half-shells which are can be joined together by fasteners, such as screws.

An electric motor 18 is mounted in the motor housing portion 14. In embodiments in which the housing is formed by two half-shells, the motor is held in position and braced without play in the motor housing portion 14 by shaped ribs and walls (not shown) provided in each shell. The motor 18 includes a motor output shaft 20 that extends forwardly from the motor to engage a gearbox 22 mounted onto the front portion of the motor housing 14 and forms the nose of the power tool 10. The gearbox 22 houses a planetary gear system (not shown) that is configured to be driven by the output shaft 20.

A power takeoff spindle 24 protrudes from the front of the gearbox 22 that is configured to be driven to rotate by the planetary gear system (not shown) of the gearbox 22. The spindle 24 includes a tool holding portion 26 that is configured to removably retain various complementarily configured accessory tools and tools bits onto the spindle 24. In one embodiment, the tool holding portion 26 of the spindle 24 comprises a hexagon-shaped socket configured to receive similarly sized hexagon-shaped accessories and tool bits, such as bit 25.

A ON/OFF trigger 28 is located on the pistol grip portion 16 of the housing 12 for controlling the operation of the motor 18. Referring to FIGS. 6 and 7, the trigger 28 includes a contact plate 30 that forms an ON/OFF switch in conjunction with counterpart contacts 32 fixedly located in the tool 10. When the trigger 28 is pressed inwardly, the contact plate 30 contacts the counterpart contact 32 and closes the power circuit which provides power to the motor 18. When the trigger 28 is released, the contact plate 30 is moved away from the counterpart contact 32 thereby opening the power circuit and cutting off power to the motor 18. Biasing members, such as springs 34, are used to bias the trigger 28 outwardly to move the contact plate 30 away from the contacts 32.

A direction control switch 38 is provided in the housing 12 for controlling the direction of rotation of the motor 18. As depicted, the direction control switch 38 is located above the trigger 28 and comprises a slide switch. In alternative embodiments, the direction control switch 38 may comprise any suitable type of switch and be provided in other suitable locations on the tool 10.

The counterpart contacts 32 associated with the contact plate 30 are provided on an elongated circuit board 36, extending in the interior of the grip portion 16, diametrically opposite the contact plate 32 and in its reciprocation region. The contacts 32 are electrically connected to a power circuit that is implemented on the circuit board 36. When the contact plate 30 on the trigger contacts the counterpart contacts 32 on the circuit board 36, the power circuit is closed and power is supplied from a power source, such as battery 40, to the motor 18. The circuit board 36 is arranged generally perpendicular to the center plane of the housing 12 so that the circuit board 36 can be clamped in groove-like recesses (not shown) provided in the half shells of the housing 12.

The battery 40 comprises a rechargeable battery that is secured within the pistol grip portion 16 of the housing 12. The battery 40 is arranged generally parallel to the circuit board 36 and includes contact plates 42, 44 at each end of the battery 40 which serve as soldering lugs and are wired to the circuit board and electrically connected to the power circuit. In one embodiment, the rechargeable battery 40 comprises a lithium-ion cell battery although, in other embodiments, other types of rechargeable batteries, including NiCad cell batteries, may be used.

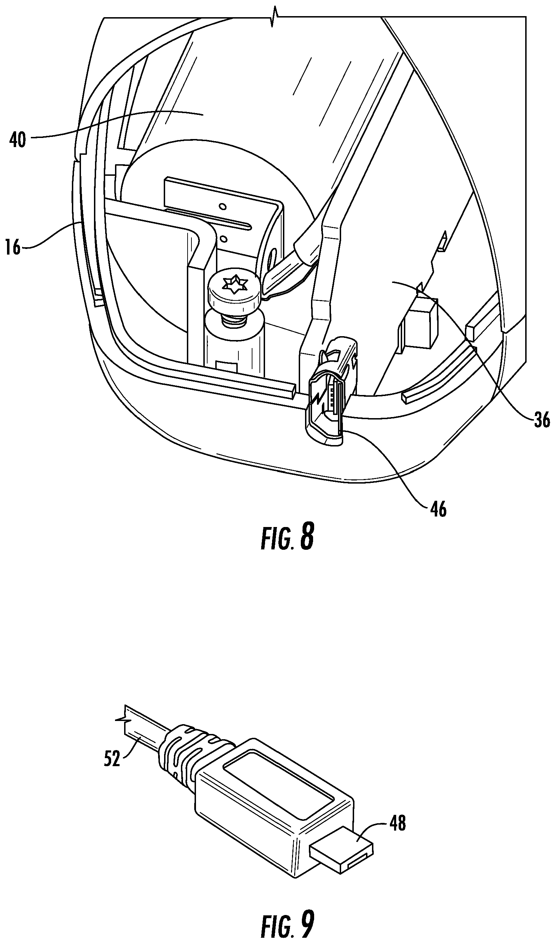

A charging circuit is implemented on the circuit board 36 that is electrically coupled to the battery 40. The power tool 10 is provided with a charging port 46 which is wired to the circuit board 36 and electrically connected to the charging circuit. The charging port 46 is configured to receive a charging connector 48 (FIG. 9) that is coupled to a power source (not shown), such as an AC outlet. When the charging connector 48 is received in the charging port 46 of the power tool, power from the power source is coupled to the charging circuit. In response to receiving power via the charging port 46, the charging circuit delivers power to the battery 40 to charge the battery 40. In the embodiment of FIGS. 3-7, the charging port 46 is located in the base of the grip portion 16 of the housing 12. An opening 50 is formed in the grip portion 16 of the housing to provide access to the charging port 46. In alternative embodiments, the charging portion 46 may be provided in other locations on the housing 12.

As discussed above, the charging circuit is configured to utilize a USB power source to charge the rechargeable battery. Referring to FIGS. 8 and 9, in one embodiment, the charging port 46 of the power tool comprises a standard Micro-USB port configured to receive a standard Micro-USB connector 48. The Micro-USB connector 48 is attached at an end of a USB cable 52 that is electrically coupled to a USB power source (not shown) at the other end of the cable. As discussed above, the cable may include an AC adapter and plug at the other end that enables the USB power to be derived from a conventional AC outlet. Alternatively, the cable may include a second USB connector that is connected to a USB port of a computer, laptop, or other device that is capable of providing USB power including an AC adapter and plug that is provided with a USB port.

## Claims

1. A power tool (10) comprising:
a housing (12);
an electric motor (110; 18) retained within the housing (12), the electric motor (110; 18) including an output shaft;
a power input port (46) supported within the housing (12), the power input port (46) being operatively connected to the electric motor (110; 18) and configured to supply power to the electric motor (110; 18) from an external power source;
a rechargeable battery (40) retained within the housing (12), the rechargeable battery (40) being operatively connected to the electric motor (110; 18) and configured to supply power to the electric motor (110; 18), the rechargeable battery (40) being operatively connected to the power input port (46) to receive power therefrom for recharging the rechargeable battery (40); and
a direction control switch (38) configured to control a direction of rotation of the electric motor (110; 18);
**characterized in that**
the power input port (46) comprises a universal serial bus, USB, port configured to receive a USB connector (48),
the power tool (10) further comprises a circuit board (36) secured within the housing (12), the circuit board (36) including a charging circuit implemented thereon that is electrically coupled to the battery (40), the power input port (46) being electrically coupled to the charging circuit, wherein the charging circuit is configured to receive and utilize USB power when the USB connector (48) is received in the USB port to charge the rechargeable battery (108);
the power tool (10) further comprises a further charging circuit that is configured to be connected to an AC power source and/or an DC power source (114); and
the power tool (10) further comprises a control circuit that is configured to determine which power source to use if a USB power source is connected to the USB port and an AC power source and/or DC power source is connected to the further charging circuit.

2. The power tool (10) of claim 1, wherein the power input port (46) comprises a Micro-USB port.

3. The power tool (10) of claim 1, wherein the rechargeable battery (40) comprises a lithium-ion cell battery.

4. The power tool (10) of claim 1, further comprising:
a trigger (28) supported by the housing (12), the trigger (28) including a contact plate (30); and
power contacts (32) electrically connected to the circuit board (36),
wherein the trigger (28) is movable between a first position at which the contact plate (30) is spaced apart from the power contacts (32) and a second position at which the contact plate (30) contacts the power contacts (32).

## Patentansprüche

1. Motorwerkzeug (10), umfassend:
ein Gehäuse (12);
einen Elektromotor (110; 18), innerhalb des Gehäuses (12) gehalten, wobei der Elektromotor (110; 18) eine Ausgangswelle umfasst;
einen Eingangsenergieanschluss (46), der innerhalb des Gehäuses (12) gehalten wird, wobei der Eingangsenergieanschluss (46) operativ mit dem Elektromotor (110; 18) verbunden und dafür ausgelegt ist, dem Elektromotor (110; 18) Energie von einer externen Energiequelle zuzuführen;
eine wiederaufladbare Batterie (40), die innerhalb des Gehäuses (12) gehalten wird, wobei die wiederaufladbare Batterie (40) operativ mit dem Elektromotor (110; 18) verbunden und dafür ausgelegt ist, dem Elektromotor (110; 18) Energie zuzuführen, wobei die wiederaufladbare Batterie (40) operativ mit dem Eingangsenergieanschluss (46) verbunden ist, um Energie von dort zum Wiederaufladen der wiederaufladbaren Batterie (40) aufzunehmen; und
einen Richtungssteuerungsschalter (38), der dafür ausgelegt ist, eine Rotationsrichtung des Elektromotors (110; 18) zu steuern;
**dadurch gekennzeichnet, dass**
der Eingangsenergieanschluss (46) einen USB (universellen seriellen Bus)-Port umfasst, der dafür ausgelegt ist, einen USB-Verbinder (48) aufzunehmen,
das Motorwerkzeug (10) ferner eine Schaltplatine (36) umfasst, die innerhalb des Gehäuses (12) befestigt ist, wobei die Schaltplatine (36) eine Ladeschaltung enthält, die darauf implementiert ist, die elektrisch mit der Batterie (40) verbunden ist, wobei der Eingangsenergieanschluss (46) elektrisch mit der Ladeschaltung verbunden ist, wobei die Ladeschaltung dafür ausgelegt ist, USB-Energie aufzunehmen und zu nutzen, wenn der USB-Verbinder (48) im USB-Port aufgenommen ist, um die wiederaufladbare Batterie (108) zu laden;
das Motorwerkzeug (10) umfasst ferner eine weitere Ladeschaltung, die dafür ausgelegt ist, mit einer AC-Energiequelle und/oder einer DC-Energiequelle (114) verbunden zu werden; und
das Motorwerkzeug (10) umfasst ferner eine Steuerschaltung, die dafür ausgelegt ist, festzustellen, welche Energiequelle zu nutzen ist, wenn eine USB-Energiequelle an den USB-Port angeschlossen ist und eine AC-Energiequelle und/oder DC-Energiequelle mit der weiteren Ladeschaltung verbunden ist.

2. Motorwerkzeug (10) nach Anspruch 1, wobei der Eingangsenergieanschluss (46) einen Micro-USB-Port umfasst.

3. Motorwerkzeug (10) nach Anspruch 1, wobei die wiederaufladbare Batterie (40) eine Lithiumionenzell-Batterie enthält.

4. Motorwerkzeug (10) nach Anspruch 1, ferner umfassend:
einen Trigger (28), der vom Gehäuse (12) gehalten wird, wobei der Trigger (28) eine Kontaktplatte (30) umfasst; und
Leistungskontakte (32), die elektrisch mit der Schaltplatine (36) verbunden sind,
wobei der Trigger (28) zwischen einer ersten Position, in der die Kontaktplatte (30) mit Abstand von den Leistungskontakten (32) angeordnet ist, und einer zweiten Position, in der die Kontaktplatte (30) die Leistungskontakte (32) kontaktiert, verschiebbar ist.

## Revendications

1. Outil électrique (10) comprenant :
un carter (12) ;
un moteur électrique (110 ; 18) retenu à l'intérieur du carter (12), le moteur électrique (110 ; 18) incluant un arbre secondaire ;
un port d'entrée de courant (46) supporté à l'intérieur du carter (12), le port d'entrée de courant (46) étant connecté de manière opérationnelle au moteur électrique (110 ; 18) et configuré pour fournir du courant au moteur électrique (110 ; 18) depuis une source de courant externe ;
une batterie rechargeable (40) retenue à l'intérieur du carter (12), la batterie rechargeable (40) étant connectée de manière opérationnelle au moteur électrique (110 ; 18) et configurée pour fournir du courant au moteur électrique (110 ; 18) ; la batterie rechargeable (40) étant connectée de manière opérationnelle au port d'entrée de courant (46) pour recevoir du courant de celui-ci pour recharger la batterie rechargeable (40) ; et
un interrupteur de commande de direction (38) configuré pour commander une direction de rotation du moteur électrique (110 ; 18) ;
**caractérisé en ce que**
le port d'entrée de courant (46) comprend un port de bus en série universel, USB, configuré pour recevoir un connecteur USB (48),
l'outil électrique (10) comprend en outre une carte de circuit (36) fixée à l'intérieur du carter (12), la carte de circuit (36) comprenant un circuit de chargement implémenté dessus qui est couplé électriquement à la batterie (40), le port d'entrée de courant (46) étant couplé électriquement au circuit de chargement, dans lequel le circuit de chargement est configuré pour recevoir et utiliser du courant par USB lorsque le connecteur USB (48) est reçu dans le port USB pour charger la batterie rechargeable (108) ;
l'outil électrique (10) comprend en outre un circuit de chargement supplémentaire qui est configuré pour être connecté à une source de CA et/ou une source de CC (114) ; et
l'outil électrique (10) comprend en outre un circuit de commande qui est configuré pour déterminer quelle source de courant utiliser si une source de courant par USB est connectée au port USB et une source de CA et/ou une source de CC est connectée au circuit de chargement supplémentaire.

2. Outil électrique (10) selon la revendication 1, dans lequel le port d'entrée de courant (46) comprend un port micro-USB.

3. Outil électrique (10) selon la revendication 1, dans lequel la batterie rechargeable (40) comprend une batterie à cellule ion-lithium.

4. Outil électrique (10) selon la revendication 1, comprenant en outre :
un déclencheur (28) supporté par le logement (12), le déclencheur (28) incluant un plot (30) ; et
des contacts (32) connectés électriquement à la carte de circuit (36),
dans lequel le déclencheur (28) est mobile entre une première position dans laquelle le plot (30) est espacé des contacts (32) et une seconde position dans laquelle le plot (30) contacte les contacts (32).
